# EUROPEAN PATENT SPECIFICATION

(11) **EP 2 441 143 B1**
(45) Date of publication and mention of the grant of the patent: **31.07.2013**
(21) Application number: 09776694.3
(22) Date of filing: 08.06.2009
(51) Int. Cl.: H02B 13/045

(54) **METAL ENCAPSULATION FOR SWITCH GEAR, AND METHOD FOR MANUFACTURING THE SAME**
METALLKAPSELUNG FÜR SCHALTANLAGE UND DESSEN HERSTELLUNGSVERFAHREN
ENVELOPPE MÉTALLIQUE POUR APPAREILLAGE DE COUPURE ET SOM PROCÉDÉ DE FABRICATION

(43) Date of publication of application: 18.04.2012
(73) Proprietor: ABB Technology AG, 8050 Zürich (CH)
(72) Inventor: WUILLEMET, Norbert, 40885 Ratingen (DE); WALDHOFF, Albert, 40625 Düsseldorf (DE)
(74) Representative: Schmidt, Karl Michael
(86) International application number: PCT/EP2009/004100
(87) International publication number: WO 2010/142302

(56) References cited:
- EP-A1- 0 871 269
- DE-A1- 19 500 739
- DE-U1- 9 412 226
- FR-A3- 2 550 412
- GB-A- 2 272 999
- JP-A- 6 351 118

## Description

The present invention relates to a metal encapsulation for switch gear, and method for manufacturing the same, according to the preamble of claims 1 and 6.

The field of the invention is **g**as **i**solated **s**witchgear especially for medium voltage. The common manufacturing method in the state of the art for a GIS encapsulation is the following:
(1) Automated cutting of certain shapes (in the following, so called metal blanks) from a metal board;
(2) Bending the blanks to half-shells, e.g. C-shapes on a manual operated bending machine;
(3) Fixation of half-shell is achieved with few welding spots;
(4) Manual placing and spot welding of stiffening elements on the half-shell inner surface;
(5) Manual joining of half-shells to a cube by spot welding;
(6) Automated welding of the half-shell edges to a gas tight encapsulation;

*This is known from the* GB 2272 999 A*.*

The production quantities of GIS encapsulation are low, compared to the quantities of e.g. automobile industries. This fact limits the profitability of process-automation in the production process, due to the high investment costs of such an equipment. As a result many production steps in the well know manufacturing process discribend above have to be carried out manually, which results in costly man-hours.

The following steps have the described disadvantages:
Step 2, as described above, results in that dependant on the size of the intended encapsulation, the manual handling of the blanks is time consuming and produces strong physical strain for the worker.

According to step 4, the placing and welding of stiffening elements on the inside surface of the half shells is a laborious and complicated work. The heavy half shell has to be rotated many times and various positioning devices have to be used to place the elements on the appropriate position. The manual spot welding to affix the stiffening elements to the shells in the following is very time-consuming.

Based on this, it is the object of the invention, to make the manufacturing of the encapsulation easier.

According to the encapsulation, the problem is solved by the features of claim 1.

Further embodiments are described in the depending claims 2 to 5 .

According to a method for manufacturing, the problem is solved by the features of claim 6 .

Further embodiments of the manufacturing process are described in further depending claims.

The steps of the new production process is in contrary to the state of the art process, described above the following:
a) Automated cutting of the blanks including perforation of the bending edges.
b) Positioning or implementation of the stiffening elements. Placing a template on the blank allows a positioning of elements in a simple manner;
c) Automated welding of the stiffening elements on the flat blank. This step is obsolete, if the stiffening elements will be implemented into the blanks by rolling
d) Manual bending of the blanks to half-shells without bending machine is possible due to the perforation of the blank.
e) Manual joining of half-shells to a cube by spot welding
f) Automated welding or joining of the half-shell edges to a gas tight encapsulation (including perforated edges). Alternatively it is possible to produce a gastight joining not by welding, but for example by adhesive sealing.

An alternative step to b) and c) is using a rolling for shaping stiffering corrugations into the blanks itself.

Due to the perforation, no bending machine is necessary any more. The metal blank can be bend manually comparable to a folding box. This allows the positioning and automated welding of the stiffening elements on the flat blank, because no collision within the bending machine is possible. The positioning of the elements with a template on the flat blank- surface is much easier than on the inside of a bended blank. The following welding process of the stiffening elements can be performed by a cost-efficient welding robot, which is much more cost efficient than manual point welding on the inner surface of a bended blank. Dependant on the size and shape of the blank cut in the first step, the entire encapsulation can be prepared that way. The manufacturing of two half-shells is not necessary any more. After folding and fixation of the encapsulation by spot welding, all edges including the perforated ones, are welded together automatically to a gas tight encapsulation. The disadvantage that even the perforated, bended edges have to be welded is over compensated by the advantages which results from the automated welding of stiffening elements.

A further embodiment of the invention is, that the metal blank or blanks are folded to a gastight metal encapsulation. This can be done easily by welding along the perforation after folding, or by sealing or glueing with plastic or other adhesive sealings.

A further embodiment of the invention is, that the stiffening elements or structures are implemented in, or welded on the metal blanks, in order to strengthen the walls of the gastight metal encapsulation mechanically, like described above.

An advantageous embodiment is, that the encapsulation consist of at least two segments or blanks, which are connected or welded together.

The basical features of the apparatus part of the invention is, that the metal blanks are produced in a shape of a defolded box, in which perforation lines will be implemented along predetermined folding lines (bending edges), that the blanks will be folded to a 3-dimensional box.

The box will be closed gastightly by welding after folding into position.

Alternatively the box can also be closed gastightly by plastic or adhesive sealing or glueing.

In a further advantageous embodiment, the positioning or implementation of the stiffening elements, a template or a mask will be positioned on the blank, in order position the stiffing elements or the milling/rolling tool to implemente the stiffing corrugation lines into the blank.

A further advantageous embodiment is, that the stiffening elements will be welded automatically on the flat blank, for example by a welding robot.

For easy and especially reproductable manufacture, the blank will be bended to half-shells along the perforation lines on the blank.

So the half-shells will be fixed in the position of a cube by spot welding.

The manufacturing process is innovatively simplified in such a way, that the welding will be generated automatically by a welding robot, along the half-shell edges to a gas tight encapsulation finally.

The invention is shown in several examples or embodiments in the drawings.
Figure 1: Top View of a blank
Figure 2: Two blanks bended
Figure 3: Further Step by fixing with welding spots
Figure 4: blank with stiffening elements

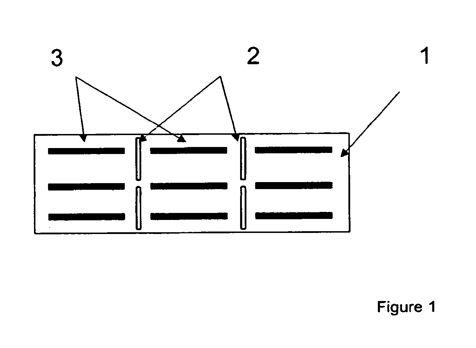

Figure 1 shows the top view of a blank, cut from a metal board with perforation. On its surface stiffening elements have been placed by using a template and have been welded by a robot. Another possibility is to implemente stiffening elements by milling corrugations into the metal blank.

The perforations 2 are implemented into the blank 1. The so prepared blank will be folded along these perforations.

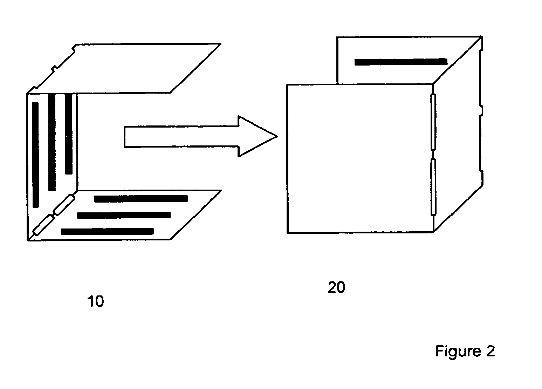

Figure 2 shows two blanks as shown in figure 1, bended by hand to two half-shells 10 and 20 which will be welded together. In the case of a gastight encapsulation, the perforations wille be closed by welding or by gluing plastic along these perforations.

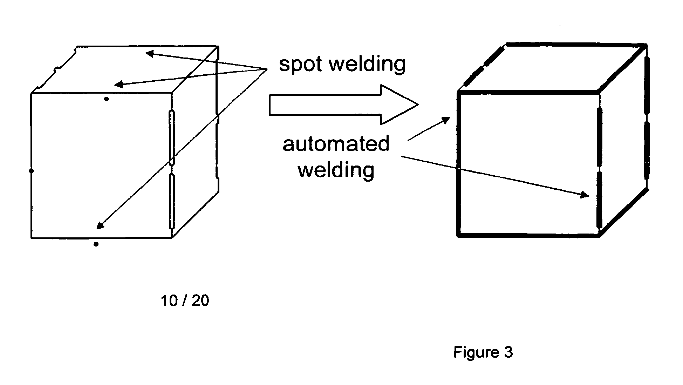

Figure 3 shows the arrangement of two halfshells 10 and 20 shown in figure 2 jointed together with welding spots. In a finally step gas tight welds are be placed on all edges in an automatic welding process.

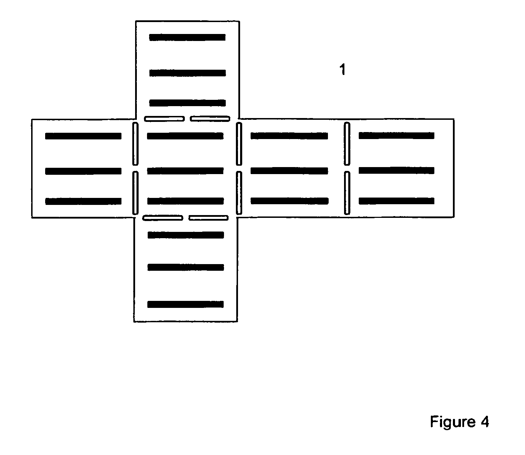

Figure 4 shows a blank 1 for a one piece encapsulation with stiffening profiles foldable by hand. This blank already constist of all wallparts, necessary for a complete encapsulation.

### List of position numbers

- 1: metal blank
- 2: perforation
- 3: stiffening elements
- 10: first folded part
- 20: second folded part

## Claims

1. Metal encapsulation for switch gears or switch gear arrangements, especially for medium voltage switchgear in which the metal blank is cut and joined together,
wherein the metal blank (1) or different metal blanks (10, 20) to be joined together have the shape of a defolded box, in which perforations (2) are implemented along predetermined folding lines, and that the metal blanks are folded to a 3-dimensional encapsulation and that the metal blank or blanks are folded to a gastightly joined metal encapsulation.

2. Metal encapsulation according to claim 1,
**characterized in that,**
the metal encapsulation is gastightly closed by welding.

3. Metal encapsulation according to claim 1 or 2,
**characterized in that,**
the metal encapsulation is gastightly closed by glueing or adhesive sealing.

4. Metal encapsulation according to one of claim 1 to 3,
**characterized in that,** (3)
the furthermore stiffening elements or structures (3) are implemented in, or welded or glued on the metal blanks, in order to strengthen the walls of the gastight metal encapsulation mechanically.

5. Metal encapsulation according to one of claims 1 to 3,
**characterized in that,**
the encapsulation consist of at least two segments or blanks (10, 20), which are connected or welded together.

6. Method of manufacturing metal encapsulation for switch gears or switch gear arrangements, especially for medium voltage switchgear in which the metal blanks are cut and joined together, wherein the metal blank or metal blanks (1) are produced in a shape of a defolded box, in which perforation lines (2) will be implemented along predetermined folding lines (bending edges), that the blanks will be folded to a 3-dimensional box and that
the box will be gastightly closed by welding or adhesive sealing or glueing after folding into position.

7. Method according to claim 6,
**characterized in that,**
the for positioning or implementation of the stiffening elements (3), a template or a mask will be positioned on the blank, in order to position the stiffing elements or structures (3) or the rolling tool to implement the stiffing corrugation lines into the blank (1).

8. Method according to claim 7,
**characterized in that,**
the stiffening elements (3) will be fixed or welded automatically on the flat blank (1).

9. Method according to one of claims 6 to 8,
**characterized in that,**
the blank (1) will be bended to half-shells along the perforation lines (2) on the blank (1).

10. Method according to claim 9,
**characterized in that,**
the half-shells (10, 20) will be fixed in the position of a cube by spot welding.

11. Method according to one of claim 6 to 10,
**characterized in that,**
the welding will be generated automatically by a welding robot, along the half-shell edges to a gas tight encapsulation finally.

## Patentansprüche

1. Metallkapselung für Schaltvorrichtungen oder Schaltvorrichtungsanordnungen, insbesondere für eine Mittelspannungsschaltvorrichtung, in der das Metallrohteil zugeschnitten und miteinander verbunden ist, wobei das Metallrohteil (1) oder unterschiedliche Metallrohteile (10, 20), die miteinander verbunden werden sollen, die Form einer entfalteten Schachtel aufweisen, in der Perforationen (2) längs vorgegebener Faltlinien ausgeführt sind, und die Metallrohteile zu einer dreidimensionalen Kapselung gefaltet sind und das Metallrohteil oder die Rohteile zu einer gasdicht verbundenen Metallkapselung gefaltet sind.

2. Metallkapselung nach Anspruch 1,
**dadurch gekennzeichnet, dass**
die Metallkapselung durch Schweißung gasdicht verschlossen ist.

3. Metallkapselung nach Anspruch 1 oder 2,
**dadurch gekennzeichnet, dass**
die Metallkapselung durch Verkleben oder Klebemittelabdichtung gasdicht verschlossen ist.

4. Metallkapselung nach einem der Ansprüche 1 bis 3,
**dadurch gekennzeichnet, dass**
die weiteren Versteifungselemente oder Strulcturen (3) in den Metallrohteilen ausgeführt oder an sie geschweißt oder geklebt sind, um die Wände der gasdichten Metallkapselung mechanisch zu verstärken.

5. Metallkapselung nach einem der Ansprüche 1 bis 3,
**dadurch gekennzeichnet, dass**
die Kapselung aus mindestens zwei Segmenten oder Rohteilen (10, 20) besteht, die miteinander verbunden oder verschweißt sind.

6. Verfahren zum Herstellen einer Metallkapselung für Schaltvorrichtungen oder Schaltvorrichtungsanordnungen, insbesondere für eine Mittelspannungsschaltvorrichtung, in der die Metallrohteile zugeschnitten und miteinander verbunden werden, wobei das Metallrohteil oder die Metallrohteile (1) in einer Form einer entfalteten Schachtel hergestellt werden, in der Perforationslinien (2) längs vorgegebener Faltlinien (Biegekanten) ausgeführt werden, die Rohteile zu einer dreidimensionalen Schachtel gefaltet werden und die Schachtel durch Schweißen oder Klebemittelabdichten oder Verkleben nach dem Falten in die richtige Position gasdicht verschlossen wird.

7. Verfahren nach Anspruch 6,
**dadurch gekennzeichnet, dass**
zum Anordnen oder Ausführen der Versteifungselemente (3) eine Schablone oder eine Maske auf dem Rohteil angeordnet wird, um die versteifungselemente oder Strukturen (3) oder das Walzwerkzeug anzuordnen, um die Versteifungswellenlinien im Rohteil (1) auszuführen.

8. Verfahren nach Anspruch 7,
**dadurch gekennzeichnet, dass**
die Versteifungselemente (3) automatisch auf dem ebenen Rohteil (1) befestigt oder geschweißt werden.

9. Verfahren nach einem der Ansprüche 6 bis 8,
**dadurch gekennzeichnet, dass**
das Rohteil (1) längs der Perforationslinien (2) auf dem Rohteil (1) zu Halbschalen gebogen wird.

10. Verfahren nach Anspruch 9,
**dadurch gekennzeichnet, dass**
die Halbschalen (10, 20) durch Punktschweißen in der Position eines Würfels befestigt werden.

11. Verfahren nach einem der Ansprüche 6 bis 10,
**dadurch gekennzeichnet, dass**
die Schweißung automatisch längs der Halbschalenkanten zu einer schließlich gasdichten Kapselung durch einen Schweißroboter erzeugt wird.

## Revendications

1. Enveloppe métallique pour des appareillages de coupure ou des arrangements d'appareillages de coupure, en particulier pour un appareil de coupure moyenne tension, dans lequel les ébauches métalliques sont coupées et jointes les unes aux autres, dans lequel l'ébauche métallique (1) ou différentes ébauches métalliques (10, 20) à joindre les unes aux autres ont la forme d'une boîte dépliée, dans laquelle des perforations (2) sont pratiquées le long de lignes de pliage prédéterminées, et les ébauches métalliques sont pliées en une forme d'enveloppe tridimensionnelle, et l'ébauche métallique ou les ébauches métalliques est (sont) pliée (s) pour former une enveloppe métallique fermée de façon étanche au gaz.

2. Enveloppe métallique selon la revendication 1, **caractérisée en ce que** l'enveloppe métallique est fermée d'une façon étanche au gaz par soudage.

3. Enveloppe métallique selon la revendication 1 ou 2, **caractérisée en ce que** l'enveloppe métallique est fermée d'une façon étanche au gaz par collage ou scellage adhésif.

4. Enveloppe métallique selon l'une des revendications 1 à 3, **caractérisée en ce que** les éléments ou les structures de raidissement supplémentaires (3) sont intégrés dans, ou soudés ou collés sur les ébauches métalliques, dans le but de renforcer mécaniquement les parois de l'enveloppe métallique étanche au gaz.

5. Enveloppe métallique selon l'une des revendications 1 à 3, **caractérisée en ce que** l'enveloppe est constituée d'au moins deux segments ou ébauches (10, 20) qui sont connectés ou soudés l'un à l'autre.

6. Procédé de fabrication d'une enveloppe métallique pour des appareillages de coupure ou des arrangements d'appareillages de coupure, en particulier pour un appareil de coupure moyenne tension, dans lequel les ébauches métalliques sont coupées et jointes les unes aux autres, dans lequel l'ébauche métallique ou les ébauches métalliques (1) est (sont) produite (s) sous la forme d'une boîte dépliée, dans lequel des lignes de perforation (2) seront pratiquées le long de lignes de pliage prédéterminées (bords de pliage), les ébauches seront pliées en une forme de boîte tridimensionnelle, et la boîte sera fermée de façon étanche au gaz par soudage ou scellage adhésif ou collage après le pliage en position.

7. Procédé selon la revendication 6, **caractérisé en ce que**, pour le positionnement ou l'intégration des éléments de raidissement (3), un gabarit ou un masque sera positionné sur l'ébauche, dans le but de positionner les éléments ou les structures de raidissement (3) ou l'outil de roulage pour imprimer les lignes d'ondulation de raidissement dans l'ébauche (1) .

8. Procédé selon la revendication 7, **caractérisé en ce que** les éléments de raidissement (3) seront fixés ou soudés automatiquement sur l'ébauche plate (1).

9. Procédé selon l'une des revendications 6 à 8, **caractérisé en ce que** l'ébauche (1) sera pliée en demi-coquilles le long de lignes de perforation (2) sur l'ébauche (1).

10. Procédé selon la revendication 9, **caractérisé en ce que** les demi-coquilles (10, 20) seront fixées dans la position d'un cube par une opération de soudage par points.

11. Procédé selon l'une des revendications 6 à 10, **caractérisé en ce que** le soudage sera généré automatiquement par un robot de soudage, le long des bords des demi-coquilles afin de former finalement une enveloppe étanche au gaz.
